# EUROPÄISCHE PATENTSCHRIFT

(11) **EP 0 789 228 B1**
(45) Veröffentlichungstag und Bekanntmachung des Hinweises auf die Patenterteilung: **07.04.2004**
(21) Anmeldenummer: 97101330.5
(22) Anmeldetag: 29.01.1997
(51) Int. Cl.: G01D 5/347

(54) **Lichtelektrische Positionsmesseinrichtung**
Opto-electrical position measuring device
Dispositif opto-électrique de mesure de positions

(30) Priorität: 08.02.1996 US 598479
(43) Veröffentlichungstag der Anmeldung: 13.08.1997
(73) Patentinhaber: Dr. Johannes Heidenhain GmbH, 83292 Traunreut (DE)
(72) Erfinder: Setbacken, Robert, Santa Barbara, CA 93109-1614 (US)

(56) Entgegenhaltungen:
- DE-A- 4 006 789
- US-A- 4 840 488
- PATENT ABSTRACTS OF JAPAN vol. 095, no. 004, 31. Mai 1995 & JP 07 027543 A (CANON INC), 27. Januar 1995 -& US 5 534 693 A (KONDO HIROSHI ET AL) 9. Juli 1996

## Beschreibung

Die Erfindung betrifft eine lichtelektrische Positionsmeßeinrichtung zur Längen- oder Winkelmessung gemäß dem Oberbegriff des Anspruches 1.

Derartige Meßeinrichtungen werden insbesondere bei Bearbeitungsmaschinen zur Messung der Relativlage eines Werkzeuges bezüglich eines zu bearbeitenden Werkstückes sowie bei Koordinatenmeßmaschinen zur Ermittlung von Lage und Abmessungen von Prüfobjekten eingesetzt. Dabei wird eine relativ zu einer Abtasteinheit verschiebbare Maßverkörperung lichtelektrisch abgetastet, indem das Licht einer Lichtquelle durch die Relativverschiebung zwischen der Maßverkörperung und eines Abtastgitters moduliert wird und dieses modulierte Licht von Photodetektoren erfaßt wird. Die Photodetektoren liefern somit positionsabhängige elektrische Abtastsignale, die mittels einer Auswerteeinheit - insbesondere einer Interpolationseinheit und eines Zählers - in bekannter Weise weiterverarbeitet werden.

Aus der US 4,840,488 ist eine lichtelektrische Positionsmeßeinrichtung bekannt, bei der versucht wurde, die Abtasteinheit kompakt aufzubauen. Gemäß Figur 10 der US 4,840,488 wird dies dadurch versucht, daß das Abtastgitter auf einer Seite eines transparenten Trägers aufgebracht ist und die Photodetektoren auf der anderen Seite dieses Trägers angeordnet sind.

Dabei sind die Photodetektoren auf einem stabilen Leitungsrahmen befestigt und kontaktiert und diese Baueinheit wird vergossen und danach erst mit dem Träger des Abtastgitters verbunden.

Diese Anordnung hat den Nachteil, daß jeder der Photodetektoren relativ zu dem Leitungsrahmen positioniert werden muß und dieser Leitungsrahmen wiederum zu dem Träger des Abtastgitters korrekt zu positionieren ist. Darüber hinaus ist der Leitungsrahmen schwierig herstellbar.

Man hat versucht, diese Nachteile zu vermeiden, indem alle Photodetektoren in einem gemeinsamen Halbleitersubstrat integriert werden und das Abtastgitter direkt auf die Oberfläche. der Photodetektoren aufgebracht wurde. Eine derartige Positionsmeßeinrichtung ist aus der DE-40 06 789-A1 bekannt. Bei dieser Positionsmeßeinrichtung sind im Halbleitersubstrat auch noch weitere elektrische Schaltkreise, wie Vorverstärkung, Vergleich der Ausgangssignale oder Intensitätsregelung der Lichtquelle integriert.

Der Nachteil einer derartigen Meßeinrichtung besteht darin, daß das Halbleitersubstrat mit dem direkt aufgebrachten Abtastgitter individuell entsprechend der Teilungsperiode der abzutastenden Maßverkörperung gefertigt werden muß. Es ist bekannt, daß die Teilungsperiode des Abtastgitters an die Teilungsperiode der Maßverkörperung angepaßt werden muß. Weiterhin ist die Oberfläche der Photodetektoren bei der Aufbringung des Abtastgitters chemischen Prozessen ausgesetzt, wodurch die elektrischen Eigenschaften des Halbleitersubstrats nachteilig beeinflußt werden können.

In der US 5,534,693 ist eine Meßeinrichtung mit einem Maßstab und einer relativ dazu beweglichen Abtasteinrichtung beschrieben. Zur Detektion einer Referenzposition ist auf dem Maßstab am Ort der Referenzposition ein Photodetektor angeordnet. Die Kontaktierung des Photodetektors mit Leiterbahnen auf der Oberfläche des Maßstabs erfolgt über chip-on-glass Technik.

Diese chip-on-glass Technik wird auch bei der lichtelektrischen Meßeinrichtung gemäß der EP 0 564 683 A1 angewandt, von der unsere Erfindung ausgeht.

Der Photodetektor wird mit Leiterbahnen auf einer Oberfläche der relativ zum Maßstab beweglichen Abtastplatte kontaktiert. Die Blendeneinrichtung ist auf der von den Leiterbahnen abgewandten Seite, also auf der dem Maßstab zugewandten Seite angeordnet.

Aufgabe der Erfindung ist es, eine lichtelektrische Positionsmeßeinrichtung zu schaffen, die einfach aufgebaut ist und kostengünstig herstellbar ist.

Die mit der Erfindung erzielten Vorteile bestehen insbesondere darin, daß die Detektoranordnung der Positionsmeßeinrichtung durch einfache, aus der Halbleiterfertigung bekannte Verfahren hergestellt werden kann. Wesentlich dabei ist, daß die Photodetektoren unabhängig von der Teilungsperiode der abzutastenden Maßverkörperung hergestellt werden können und somit auch als Massenartikel günstig eingekauft und auf Lager gehalten werden können. Nur das kostengünstige herstellbare Abtastgitter der Abtastplatte muß individuell entsprechend der Teilungsperiode der Maßverkörperung unabhängig davon gefertigt werden. Die Verbindung der Abtastplatte mit den Photodetektoren erfolgt mit einfachen Mitteln, wobei die Abtastplatte auch die Funktion einer Leiterplatte übernimmt.

Vorteilhafte Ausbildungen der Erfindung sind in den abhängigen Ansprüchen angegeben.

Ausführungsbeispiele der Erfindung werden anhand der Zeichnung näher erläutert.

Es zeigt
- Figur 1: schematisch einen Schnitt einer Positionsmeßeinrichtung gemäß der Erfindung;
- Figur 2: die Detektoranordnung mit den Photodetektoren sowie der Abtastplatte und der Abtastteilung gemäß Figur 1 in vergrößerter Darstellung;
- Figur 3: eine Photodiode im Schnitt und
- Figur 4: einen Phototransistor im Schnitt.

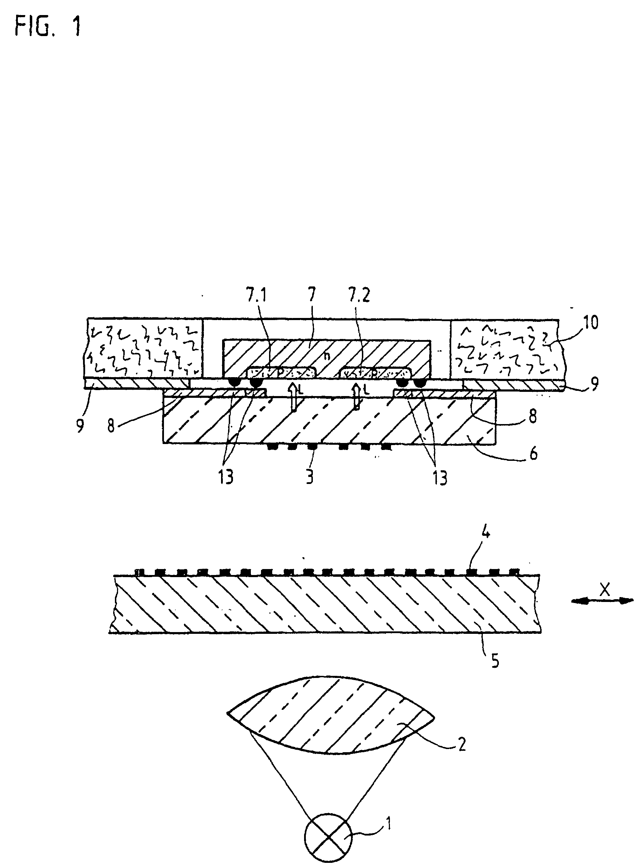

Die in Figur 1 dargestellte Positionsmeßeinrichtung weist eine Lichtquelle 1 auf, deren Licht von einer Linse 2 kollimiert wird und durch die Relativverschiebung in Meßrichtung X zwischen einer Abtasteinheit und einer Maßverkörperung 4 positionsabhängig moduliert wird. Die Maßverkörperung 4 ist eine inkrementale Teilung in Form von abwechselnd lichtdurchlässigen und lichtundurchlässigen Strichen auf einer Oberfläche eines transparenten Maßstabes 5 aus Glas.

Die Abtasteinheit beinhaltet eine Abtastteilung 3, die ebenfalls eine inkrementale Teilung in Form von abwechselnd lichtundurchlässigen und lichtdurchlässigen Strichen ist. Gemäß der Erfindung ist diese Abtastteilung 3 auf einer Oberfläche eines transparenten Trägers 6 aufgebracht, wobei auf diesem Träger 6 Photodetektoren 7.1 bis 7.4 zum Empfang des modulierten Lichtes L aufgebracht und mit elektrischen Leitungen 8 des Trägers 6 kontaktiert sind.

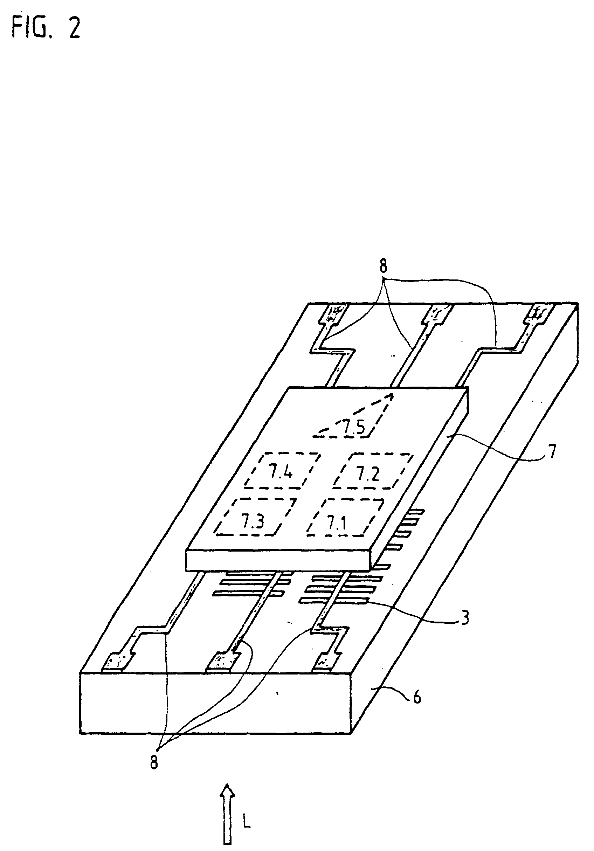

Die Photodetektoren 7.1 bis 7.4 sind in einem gemeinsamen Halbleitersubstrat 7 eingebracht. Im dargestellten Beispiel sind in dem gemeinsamen Halbleitersubstrat 7 vier Photodetektoren 7.1. bis 7.4 in Form von lichtempfindlichen pn-Übergängen vorgesehen. Zur Herstellung eines pn-Überganges werden die bekannten Verfahren der Halbleitertechnik angewandt. Als Halbleitersubstrat 7 kommen Materialien wie beispielsweise Germanium (Ge), Silizium (Si), Gallium-Arsenid (GaAs), Gallium-Aluminium-Arsenid (GaAlAs) oder Indium-Phosphit (InP) in Frage. Durch Bestrahlung eines pn-Überganges wird die elektromagnetische Strahlung L in elektrische Signale umgewandelt. Das Halbleitersubstrat 7 enthält in bevorzugter Weise auch integrierte Schaltkreise 7.5 zur Verarbeitung dieser elektrischen Signale. Diese Schaltkreise 7.5 können beispielsweise Verstärker, Vergleicher, Digitalisier- oder Interpolationsschaltungen sein. In Figur 2 ist ein derartiger Schaltkreis 7.5 schematisch als Verstärker dargestellt.

Eine Oberfläche des Halbleitersubstrats 7 weist elektrische Anschlußkontakte 13 auf, die in Richtung des Trägers 6 weisen. Auf der Seite des Trägers 6, auf der das Halbleitersubstrat 7 vorgesehen ist, sind auf der Oberfläche des Trägers 6 elektrische Leiterbahnen 8 aufgebracht, die mit den Anschußkontakten 13 einen direkten elektrischen Kontakt haben. Die Leiterbahnen 8 sind Schichten, die durch bekannte Lithographieverfahren aufgedampft, aufgesputtert und/oder aufgalvanisiert wurden. Die Kontaktierung der Anschlußkontakte 13 mit den Leiterbahnen 8 erfolgt bevorzugt mittels Lötung, insbesondere Reflow-Lötung oder mittels elektrisch leitendem Klebstoff. Die Anschlußkontakte 13 werden auch bonding pads genannt und sind mit gold bumps versehen. Alle mit den Leiterbahnen 8 zu kontaktierenden Anschlußkontakte 13 befinden sich auf der Seite der lichtempfindlichen Seite der Photodetektoren 7.1 bis 7.4 und stehen somit den Leiterbahnen 8 direkt gegenüber. Dadurch wird es ermöglicht, daß alle Anschlußkontakte 13 durch einen einzigen Verfahrensschritt mit den Leiterbahnen 8 kontaktiert werden. Diese Methode der Kontaktierung ist in der Elektrotechnik auf dem Gebiet "chip on glass" unter dem Begriff "Flip-Chip" bekannt. Das bedeutet, daß Halbleiter-Bauelemente - also chips - direkt und somit ohne Gehäuse und ohne zusätzlichen Träger auf einer Leiterplatte kontaktiert und montiert werden. Diese Montage ist besonders stabil und einfach, da kein Drahtbonden erforderlich ist.

In Figur 2 ist eine perspektivische Ansicht der Detektoranordnung, bestehend aus dem transparenten Träger 6, der Abtastteilung 3, den Leiterbahnen 8 sowie dem Halbleitersubstrat 7 mit den Photodetektoren 7.1 bis 7.4 und dem integrierten Schaltkreis 7.5 dargestellt.

Die Leiterbahnen 8 des Trägers 6 dienen auch zur elektrischen Verbindung mit Leiterbahnen 9 einer Leiterplatte 10.

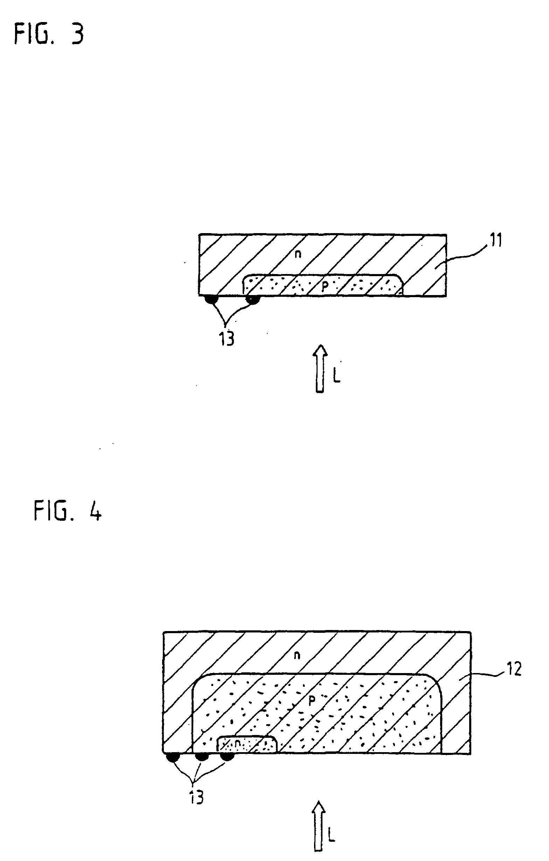

Die Photodetektoren 7.1 bis 7.4 sind bevorzugt Photodioden oder Phototransistoren. Anstelle eines gemeinsamen Halbleitersubstrats 7 mit mehreren Photodetektoren 7.1 bis 7.4 können auch mehrere einzelne Photodetektoren als Einzelbauelemente auf dem Träger 6 positioniert und kontaktiert werden. Derartige Einzelbauelemente sind in den Figuren 3 und 4 dargestellt. Figur 3 zeigt eine Photodiode 11 mit einem lichtempfindlichen pn-Übergang und zwei Anschlußkontakten 13. Figur 4 zeigt einen Phototransistor 12 bekannten Aufbaus mit drei Anschlußkontakten 13.

Aus den Figuren 1 bis 4 ist ersichtlich, daß bei den Photodetektoren 7.1 bis 7.4 sowie 11, 12 alle benötigten Anschlußkontakte 13 auf der lichtempfindlichen Seite zur Verfügung stehen. Die erfindungsgemäße Kontaktierung mit dem Träger 6 ist daher auch diesbezüglich besonders vorteilhaft, da kein Drahtbonden erforderlich ist.

Bei den Ausführungen gemäß Figur 1 und 2, die nicht Gegenstand der Erfindung sind, ist die Abtastteilung 3 auf einer Seite des Trägers 6 und die Leiterbahnen 8 sowie die Photodetektoren 7.1 bis 7.4 sind auf der gegenüberliegenden Seite aufgebracht. Gemäß der vorliegenden Erfindung, in nicht gezeigter Weise kann die Abtastteilung auf der Seite der Leiterbahnen 8 vorgesehen.

Die Abtastteilung 3 besteht in bekannter Weise aus vier Gruppen, wobei die Teilungen der einzelnen Gruppen einen gegenseitigen Phasenversatz von 90° aufweisen. Jede Gruppe besteht aus mehreren in Meßrichtung X voneinander beabstandeten lichtundurchlässigen Strichen, die einer lichtempfindlichen Fläche eines Photodetektors 7.1 bis 7.4, 11, 12 gegenüber steht.

Der Träger 6 kann auch aus transparentem Mylar, Plastik oder anderen transparenten Materialien bestehen.

Die Erfindung ist bei lichtelektrischen Längen- oder Winkelmeßeinrichtungen einsetzbar, wobei die Abtastung der Maßverkörperung 4 im Durchlichtoder Auflicht-Abtastverfahren erfolgen kann. Die Maßverkörperung 4 kann dabei inkrementaler oder absoluter Art sein.

## Patentansprüche

1. Positionsmeßeinrichtung mit:
- einem Maßstab (5) mit einer Teilung (4);
- einer Lichtquelle (1) zur Beleuchtung der Teilung (4) des Maßstabes (5);
- einer Abtasteinheit, die zur Erzeugung von positionsabhängigen Meßsignalen relativ zum Maßstab (5) in Meßrichtung X verschiebbar ist, und die ein Halbleitersubstrat (7) mit darin ausgebildeten Photodetektoren (7.1 bis 7.4) sowie eine Abtastteilung (3) enthält, wobei
- die Abtasteinheit einen transparenten Träger (6) aufweist, auf dem die Photodetektoren (7.1 bis 7.4) und die Abtastteilung (3) angeordnet sind und ein Lichtstrahlenbündel (L) der Lichtquelle (1) von der Teilung (4) des Maßstabes (5) positionsabhängig moduliert wird, das modulierte Lichtbündel (L) auf das Abtastgitter (3) der relativ zum Maßstab (5) verschiebbaren Abtasteinheit trifft und weiter auf die Photodetektoren (7.1 bis 7.4) zur Umwandlung des positionsabhängig modulierten Lichtbündels (L) in elektrische Meßsignale geleitet wird;
- auf einer Oberfläche des transparenten Trägers (6) Leiterbahnen (8) aufgebracht sind, mit denen die Photodetektoren (7.1 bis 7.4) elektrisch verbunden sind, indem auf der lichtempfindlichen Seite der Photodetektoren (7.1 bis 7.4) auf einer Oberfläche des Halbleitersubstrats (7) angebrachte Anschlußkontakte (13) Flächenbereichen der Leiterbahnen (8) gegenüberstehen und mit den Leiterbahnen (8) kontaktiert sind, **dadurch gekennzeichnet,**
- **daß** die Abtastteilung (3) und die Leiterbahnen (8) gemeinsam auf einer Seite des transparenten Trägers (6) angeordnet sind.

2. Positionsmeßeinrichtung nach Anspruch 1, **dadurch gekennzeichnet, daß** die Abtastteilung (3) und die Leiterbahnen (8) durch Beschichtung einer Oberfläche des transparenten Trägers (6) aufgebracht sind.

3. Positionsmeßeinrichtung nach einem der Ansprüche 1 oder 2, **dadurch gekennzeichnet, daß** die Abtastteilung (3) aus vier Gruppen besteht, wobei die Teilungen der einzelnen Gruppen einen gegenseitigen Phasenversatz von 90° aufweisen und jede Gruppe aus mehreren in Meßrichtung X voneinander beabstandeten lichtundurchlässigen Strichen besteht, die einer lichtempfindlichen Fläche eines Photodetektors (7.1 bis 7.4) gegenüberstehen.

4. Positionsmeßeinrichtung nach einem der vorhergehenden Ansprüche 1 bis 3, **dadurch gekennzeichnet, daß** der transparente Träger (6) aus Glas besteht.

5. Positionsmeßeinrichtung nach einem der Ansprüche 1 bis 4, **dadurch gekennzeichnet, daß** in dem Halbleitersubstrat (7) zumindest ein elektrischer Schaltkreis (7.5) zur Verarbeitung der elektrischen Abtastsignale integriert ist.

6. Positionsmeßeinrichtung nach Anspruch 5, **dadurch gekennzeichnet, daß** der elektrische Schaltkreis eine Verstärker-, Vergleicher-, Digitalisier- oder Interpolationsschaltung ist.

## Claims

1. Position measuring device having:
- a scale (5) with a graduation (4);
- a light source (1) for illuminating the graduation (4) of the scale (5);
- a scanning unit, which is displaceable relative to the scale (5) in measuring direction X to generate position-dependent measured signals, and which contains a semiconductor substrate (7), with photodetectors (7.1 to 7.4) formed in same, as well as a scanning graduation (3), wherein
- the scanning unit has a transparent carrier (6) on which the photodetectors (7.1 to 7.4) and the scanning graduation (3) are arranged and a light-ray beam (L) from the light source (1) is modulated by the graduation (4) of the scale (5) in dependence on position, the modulated light beam (L) impinges on the scanning grating (3) of the scanning unit, which is displaceable relative to the scale (5), and is passed on to the photodetectors (7.1 to 7.4) to transform the light beam (L), modulated in dependence on position, into electrical measured signals;
- on one surface of the transparent carrier (6) are attached strip conductors (8) with which the photodetectors (7.1 to 7.4) are electrically connected in that connection contacts (13), attached to the light-sensitive side of the photodetectors (7.1 to 7.4) on one surface of the semiconductor substrate (7), face surface regions of the strip conductors (8) and are in electrical contact with the strip conductors (8), **characterised in that**
- the scanning graduation (3) and the strip conductors (8) are arranged together on one side of the transparent carrier (6).

2. Position measuring device according to claim 1, **characterised in that** the scanning graduation (3) and the strip conductors (8) are applied by coating one surface of the transparent carrier (6).

3. Position measuring device according to one of claims 1 or 2, **characterised in that** the scanning grating (3) comprises four groups, the graduations of the individual groups having a mutual phase-offset of 90° and each group comprising a plurality of opaque lines which are spaced apart from one another in measuring direction X and face a light-sensitive surface of a photodetector (7.1 to 7.4).

4. Position measuring device according to one of the preceding claims 1 to 3, **characterised in that** the transparent carrier (6) is formed from glass.

5. Position measuring device according to one of claims 1 to 4, **characterised in that** at least one electric circuit (7.5) for processing the electrical scanning signals is integrated in the semiconductor substrate (7).

6. Position measuring device according to claim 5, **characterised in that** the electric circuit is an amplifier, a comparator, a digitiser or an interpolation circuit.

## Revendications

1. Dispositif de mesure de position comprenant :
• une règle (5) avec une division (4) ;
• une source lumineuse (1) pour éclairer la division (4) de la règle (5) ;
• une unité de palpage qui, aux fins de produire des signaux de mesure dépendants de la position, peut être déplacée par rapport à la règle (5) dans la direction de mesure X et qui comprend un substrat à semi-conducteurs (7) avec des photo détecteurs, (7.1 à 7.4) formés dans celui-ci, ainsi qu'une division de palpage (3), dans laquelle
• l'unité de palpage présente un support (6) transparent sur lequel les photodétecteurs (7.1 à 7.4) et la division de palpage (3) sont disposés, un faisceau (L) de rayons lumineux de la source de lumière (1) est modulé en fonction de la position par la division (4) de la règle (5), le faisceau de rayons lumineux (L) modulé frappe le réseau de palpage (3) de l'unité de palpage mobile par rapport à la règle (5) et est transmis aux photo-détecteurs (7.1 à 7.4) aux fins de transformer le faisceau lumineux (L) modulé en fonction de la position en des signaux de mesure électriques ;
• sur une surface du support (6) transparent sont disposées des pistes conductrices (8), par l'intermédiaire desquelles les photo-détecteurs (7.1 à 7.4) sont connectés électriquement, des contacts de connexion (13) prévus sur une surface du substrat à semi-conducteurs (7), sur la face des photo-détecteurs (7.1 à 7.4) sensible à la lumière, étant disposés en regard de zones planes des pistes conductrices (8) et assurant le contact avec lesdites pistes conductrices (8), **caractérisé en ce que**
• la division de palpage (3) et les pistes conductrices (8) sont disposées ensemble sur une face du support (6) transparent.

2. Dispositif de mesure de position selon la revendication 1, **caractérisé en ce que** la division de palpage (3) et les pistes conductrices (8) sont appliquées par revêtement d'une surface du support (6) transparent.

3. Dispositif de mesure de position selon une des revendications 1 ou 2, **caractérisé en ce que** la division de palpage (3) est formée de quatre groupes, les divisions des différents groupes présentant un déphasage mutuel de 90° et chaque groupe étant formé de plusieurs traits opaques à la lumière mutuellement espacés dans la direction de mesure, qui sont disposés en vis-à-vis d'une surface sensible à la lumière d'un photo détecteur (7.1 à 7.4).

4. Dispositif de mesure de position selon une des revendications 1 à 3, **caractérisé en ce que** le support (6) transparent est en verre.

5. Dispositif de mesure de position selon une des revendications 1 à 4, **caractérisé en ce que** dans le support à semi-conducteurs (7) est intégré au moins un circuit (7.5) électrique pour le traitement des signaux de palpage électriques.

6. Dispositif de mesure de position selon la revendication 5, **caractérisé en ce que** le circuit électrique est un circuit amplificateur, un circuit comparateur, un circuit de conversion numérique ou un circuit d'interpolation.
